# EUROPEAN PATENT SPECIFICATION

(11) **EP 0 487 534 B1**
(45) Date of publication and mention of the grant of the patent: **15.06.1994**
(21) Application number: 90910490.3
(22) Date of filing: 17.07.1990
(51) Int. Cl.: A47J 47/16

(54) **POT LID HOLDER**
TOPFDECKELHALTER
SUPPORT DE COUVERCLES DE POTS

(30) Priority: 17.07.1989 US 380315
(43) Date of publication of application: 03.06.1992
(73) Proprietor: JONES, William, Burnaby, British Columbia V5G 4M6 (CA); MENEGHELLO, Lino, Burnaby, British Columbia V5C 1N4 (CA)
(72) Inventor: MENEGHELLO, Lino, Burnaby, British Columbia V5C 1N4 (CA)
(74) Representative: Frei, Alexandra Sarah
(86) International application number: PCT/CA90/00226
(87) International publication number: WO 91/01107

(56) References cited:
- FR-A- 2 390 136
- GB-A- 357 145
- US-A- 1 528 744
- US-A- 2 017 252

## Description

### BACKGROUND

The present invention relates to a holder for a pot lid used to support, the lid from a substantially vertical surface.

A common problem of storing pots together with their lids occurs when it is desired to stack the pots so as to save space. Obviously, with the lids in place on the pot stacking is impossible. One can remove the lids and attempt to store them together with the pots but again the usual curvature and shape of the lids makes them unstable and difficult to store on a flat surface.

A known device used to store the lids separately against a vertical surface much as a cupboard door consists of a wire frame which is fastened to the vertical surface and which has a plurality of vertically spaced upwardly and outwardly directed wire racks. The lid is placed against the wire rack and supported near the bottom vertically while the upper portions of the wire rack prevent tipping of the lid and to some extent restrain lateral movement thereof. The device holds several vertically spaced lids. However, the lids have a tendency to roll off of the supports and fall upon rapid swinging motion of the cupboard door. Moreover, the structure projects out from the flat surface such that if installed on the inside of a standard cupboard door would interfere with or hit the cupboard shelves. A simple, more secure system for storing pot lids is needed.

One example of a wire rack is disclosed on GB-A-354,145 which shows a trapezoidal frame with a plurality of bow-shaped wire cross-bars pivotally mounted on either end to the frame. Each of the cross-bars has an elongated depression in its middle for receiving a handle of a saucepan lid. The frame has fangs or stops to limit outward pivotal movement of the rack bars when moved from a stored position flush with the frame to a lid receiving position outwardly from the plane of the frame. Lids are held at an angle so that the entire structure extends out from the vertical supporting surface too much to allow its installation behind a typical cupboard door.

US-A-2,017,252 issued October 15, 1935 to Lentz discloses a hat rock made of a stout wire frame formed with 2 spaced apart semi-circular depressions or U-shaped portions with the ends of the frame formed into two L shaped extremities which receive a fastening element to secure the rack to a vertical supporting surface.

Another problem with any product whose members extend in three dimensions is the volume taken to package and ship the product. Known pot lid holders occupy unacceptably large volumes making shipment costs for such holders relatively high.

Accordingly, an object of the invention is to provide an improved pot lid holder for storing a pot lid from a flat vertical surface. It is a further object of the invention to provide a pot lid holder which more effectively restrains lateral movement upon rapid swinging motion of the flat vertical surface to which the pot lid holder is affixed.

Another object of the invention is to provide a pot lid holder which can be shipped in a flat form to facilitate shipping and bent into an operative form.

### SUMMARY OF THE INVENTION

According to the invention there is provided a pot lid holder for a pot lid having a central knob which includes an elongated member having a curved knob receiving portion intermediate side arms joined thereto and a laterally extending notch proximate an end of each side arm thereof defining a wall arm. Each wall arm can be bent to a position transverse to its associated side arm. Each wall arm has an attachment means affixed to an end thereof for attaching the wall arms to a flat surface so as to space the elongated member away from the flat surface and thereby permit insertion between the member and the flat surface of a pot lid. The curved portion in the elongated member receives and retains the central knob of the pot lid and thereby supports the lid.

Preferably, the notches are V-grooves whose sides are at right angles to each other. Advantageously, the curved portion, side arms, and wall arms all lie in a common plane prior to bending of the wall arms.

The attachment means may be flanged portions for permitting passage therethrough of screw fasteners. Both the elongated member and end sections area preferably made of molded plastic. A particularly advantageous form of such plastic is polypropylene.

By providing a holder which can be formed by bending from a flat form, packaging and shipping costs can be minimized as the holder can be kept in flat form until use. Moreover, by providing more than one set of grooves separating the side and wall arms the relative length of the side and wall arms can be selected by a user.

### DESCRIPTION OF THE DRAWINGS

The invention itself, as well as other features and advantages thereof, will be best understood by reference to the details description which follows, read in conjunction, with the accompanying drawings, wherein:
Figure 1 is a bottom view of the pot lid holder in flat form;
Figure 2 is an elevation view of the holder of Figure 3 showing one wall arm in bent position in dotted lines;
Figure 3 is a perspective view showing self-locking webs to lock the wall arms relative to corresponding side arms;
Figure 4 is a partial perspective view of the locking web;
Figure 5 is a perspective view Of yet another embodiment in which flange portions are bendable from a flat position;
Figure 6 is a front elevation view of the variant of Figure 5; and
Figure 7 is a bottom view of the variant of Figure 5.

### DETAILED DESCRIPTION WITH REFERENCE TO THE DRAWINGS

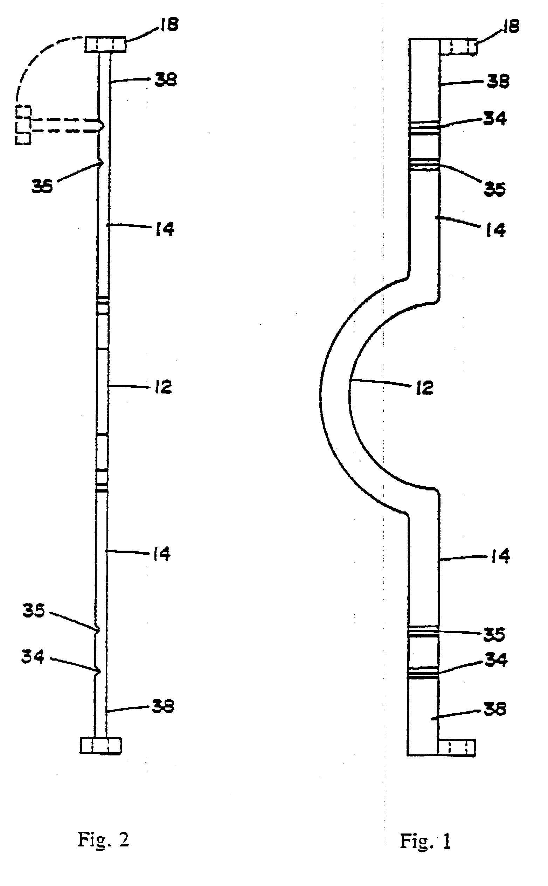

Referring to Figures 1 and 2, there is shown an embodiment of a pot lid holder which has a central recess 12, side arms 14, wall arms 38 and a flanged portion 18. The flanged portion 18 is screwed to a vertical flat surface (not shown) such that side arms 14 are level and a pot lid is inserted between the vertical surface an the holder with the knob on the lid resting on the curved recess 12.

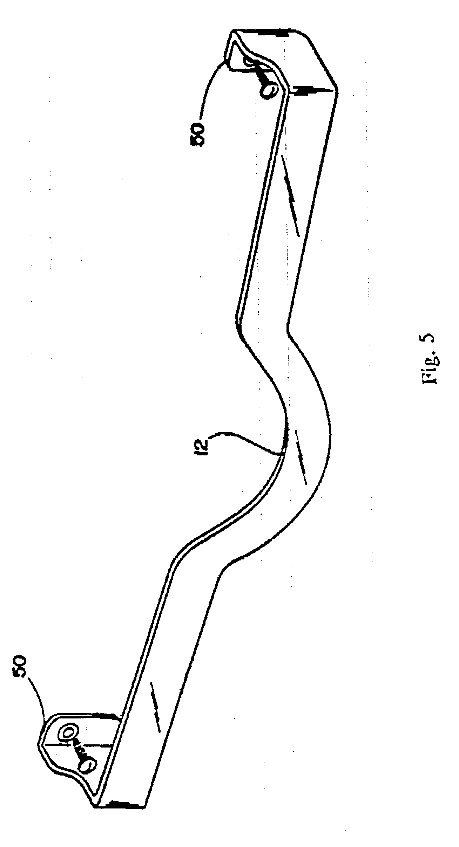

The initial flat form of the pot lid holder shown in Figures 1 and 2 facilitates its packaging and shipping. In each side arm 14 there is a V-groove 34 whose sides intersect at an angle of 90 degrees as seen in Figure 4. The region between each groove 34 and the respective flange 18 defines a wall arm 38. Wall arm 38 is bendable about groove 34 from a flat position with respect to side arms 14 and curved recess 12 to a position at right angles to the latter. The 90 degree angle of the V-groove 34 presents bending beyond the latter position. A second V-groove 35 is provided so as to enable selection of the desired wall arm length from one of two possible lengths. Obviously, any number of V-grooves may be provided.

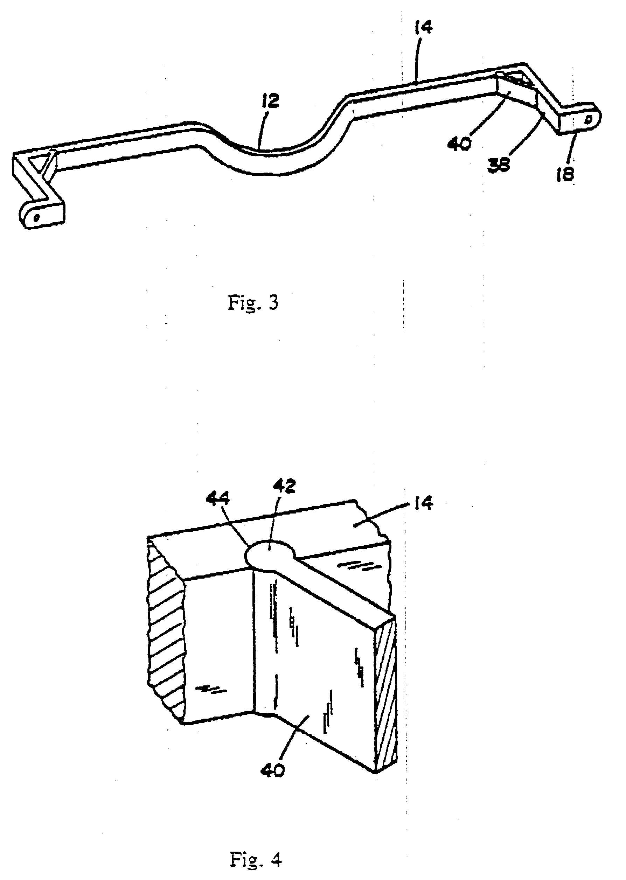

Thus, holder 10 may be packaged and shipped in flat form and on installation, wall arms 38 and flanged portion 18 bent. A locking web 40 may used to lock the side arms 14 and the wall arms 38 at right angles to each other as shown in Figures 3 and 4. In this case web 40 has a resilient free end 42 which is enlarged and side arms 14 has an opening 44 dimensioned to receive end 42 and hold the latter in place. End 42 must be forced into opening 44 until it snaps into the latter.

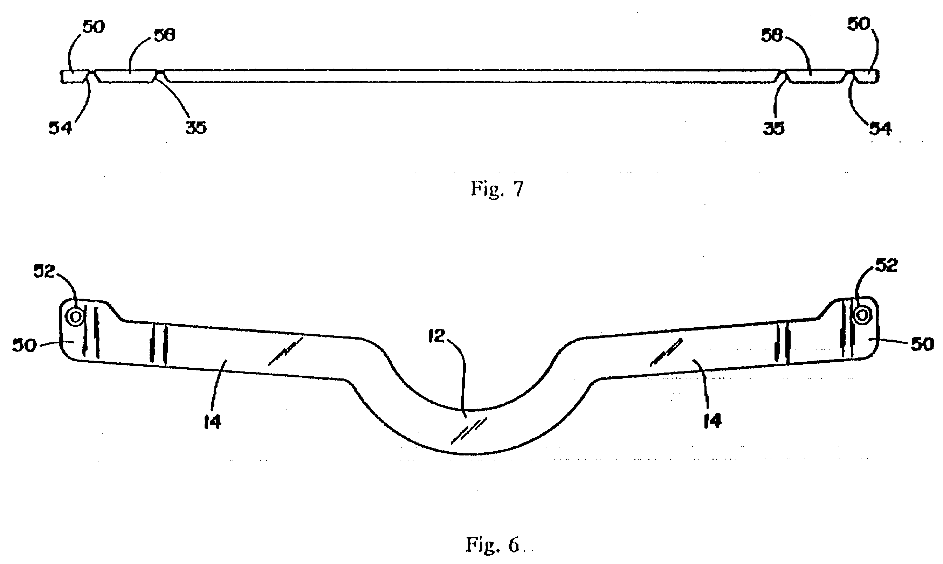

As seen in Figures 5, 6 and 7 another embodiment of the invention involves formation of the flange 50 by bending the latter relative to wall arm 58 about V-groove 54. Wall arm 58 is also bent relative to side arm 14 about V-groove 35. This embodiment is formed from a completely flat position and offers even better advantages for shipping but at the cost of having to bend flanges 50 and wall arms 58 both into position.

Obviously, other means for fastening the holder 10 to a vertical surface are possible. For example, a three-piece system is possible with two hooks separately attachable to the door and hook receptacle formed at the ends of the wall arms 16. In such an arrangement the hooks are first fastened to the vertical surface and then the wall arms 16 attach to hooks.

Accordingly, while this invention has been described with reference to illustrative embodiments, this description is not intended to be construed in a limited sense. Various modifications of the illustrative embodiments, as well as other embodiments of the invention, will be apparent to persons skilled in the art upon reference to this description.

## Claims

1. A pot lid holder for use with a pot lid of a type having a central knob, comprising an elongated member having a curved knob receiving portion (12) a side arm (14) affixed to each side of said curved portion, a flange affixed to the end of each side arm, each of said side arms (14) having a laterally extending notch (35) proximate an end thereof defining a wall arm (38) bendable inwardly to a position transverse to said side arms (14), and attachment means (18) affixed to an end of each wall arm for attaching said wall arms to a support surface.

2. A pot lid holder according to claim 1, wherein said attachment means (18) includes a flange affixed to an end of each of said wall arms (38).

3. A pot lid holder according to claim 1, wherein said notch (35) is a V-groove transverse to a corresponding one of said side arms (14).

4. A pot lid holder according to claim 2, wherein said elongated member is polypropylene.

5. A pot lid holder according to claim 1, wherein said side arms (14) and said wall arms (38) are bendable to a substantially flat position.

6. A pot lid holder according to claim 2, wherein said side arms (14), wall arms (38) and flanges (18) are bendable to or from a flat position.

7. A pot lid holder according to claim 1, wherein said curved portion (12) is centrally located with respect to said member.

8. A pot lid holder for use with a pot lid of a type having a central knob, comprising an elongated member having a curved knob receiving portion (12); an elongated arm (14, 38) affixed to each side of said curved portion, each of said elongated arms (14, 38) having a plurality of spaced apart transversely extending notches (34, 35) therein defining associated side arms (14) and wall arms (38) of predetermined lengths, said side arms and wall arms being bendable about said notches (34, 35) to a position substantially orthogonal to each other and a flange 18 affixed to the end of each wall arm (38).

9. A pot lid holder according to claim 8, wherein sides of each of said notches 34, 35 are V-grooves whose sides intersect at an angle of substantially 90 degrees.

## Patentansprüche

1. Halter für Topfdeckel zur Verwendung für einen Topfdeckel mit zentralem Griff, bestehend aus einem länglichen Teil mit einem gekrümmten Griffabschnitt (12), mit beidseitig an diesem Griffabschnitt angebrachten Seitenarmen (14), mit einer am Ende eines jeden dieser Seitenarme (14) angebrachten Halterung, mit einer nahe am Ende eines jeden dieser Seitenarme (14) seitlich angebrachten länglichen Kerbe (35), die einen bezuglich der Seitenarme (14) senkrecht einwärts biegbaren Wandarm (38) definiert und mit am Ende eines jeden Wandarms angebrachten Verbindungsmitteln (18), um diese Wandarme mit einer Trägeroberfläche zu verbinden.

2. Halter für Topfdeckel gemäss Anspruch 1, dadurch gekennzeichnet, dass die Verbindungsmittel (18) eine Halterung aufweisen, die am Ende eines jeden der Wandarme (38) befestigt ist.

3. Halter für Topfdeckel gemäss Anspruch 1, dadurch gekennzeichnet, dass die Kerbe (35) eine V-förmige Rille ist, die quer zu dem korrespondierendem Seitenarm (14) verläuft.

4. Halter für Topfdeckel gemäss Anspruch 2, dadurch gekennzeichnet, dass das längliche Teil aus Polypropylen gearbeitet ist.

5. Halter für Topfdeckel gemäss Anspruch 1, dadurch gekennzeichnet, dass die Seitenarme (14) und die Wandarme (38) in eine mehr oder weniger flache Position biegbar sind.

6. Halter für Topfdeckel gemäss Anspruch 2, dadurch gekennzeichnet, dass die Seitenarme (14), die Wandarme (38) und die Halterung in/aus einer flachen Position biegbar sind.

7. Halter für Topfdeckel gemäss Anspruch 1, dadurch gekennzeichnet, dass der gekrümmte Abschnitt (12) bezüglich des länglichen Teils mittig zentriert ist.

8. Halter für Topfdeckel zur Verwendung für einen Topfdeckel mit zentralem Griff, bestehend aus einem länglichen Teil mit einem gekrümmten Griffabschnitt (12), mit beidseitig an diesem Griffabschnitt angebrachten länglichen Armen (14,38), wobei ein jeder dieser länglichen Arme (14,38) mehrere gegeneinander getrennte, sich schräg ausdehnende Kerbe (34,35) aufweist, die Seitenarme (14) und Wandarme (38) von bestimmter Länge definieren, die mittels der Kerben (34,35) senkrecht zueinander biegbar sind und mit am Ende eines jeden Wandarms (38) angebrachten Verbindungsmitteln (18).

9. Halter für Topfdeckel gemäss Anspruch 8, dadurch gekennzeichnet, dass die Seiten einer jeden dieser Kerben (34,35) V-förmige Rillen sind, deren Seiten sich in einem Winkel von rund 90° überschneiden.

## Revendications

1. Porte-couvercle de casserole utilisable avec un couvercle de casserole du type comportant un bouton central, qui comprend un élément allongé avec une partie incurvée (12) de réception du bouton, un bras latéral (14) fixé de chaque côté de ladite partie incurvée, une patte fixée à l'extrémité de chaque bras latéral, chacun desdits bras latéraux (14) présentant une encoche (35) se prolongeant latéralement à proximité d'une de ses extrémités, définissant un bras mural (38) susceptible d'être coudé vers l'intérieur jusqu'à une position perpendiculaire auxdits bras latéraux (14) et un moyen de fixation (18) fixé à une extrémité de chaque bras mural pour fixer lesdits bras muraux à une surface support.

2. Porte-couvercle de casserole selon la revendication 1, dans lequel ledit moyen de fixation (18) comprend une patte fixée à une extrémité de chacun desdits bras muraux (38).

3. Porte-couvercle de casserole selon la revendication 1, dans lequel ladite encoche (35) est une rainure en V perpendiculaire à un correspondant desdits bras latéraux (14).

4. Porte-couvercle de casserole selon la revendication 2, dans lequel ledit élément allongé est en polypropylène.

5. Porte-couvercle de casserole selon la revendication 1, dans lequel lesdits bras latéraux (14) et lesdits bras muraux (38) peuvent être coudés jusqu'à une position sensiblement à plat.

6. Porte-couvercle de casserole selon la revendication 2, dans lequel lesdits bras latéraux (14), bras muraux (38) et pattes (18) sont susceptibles d'être coudés vers ou à partir d'une position à plat.

7. Porte-couvercle de casserole selon la revendication 1, dans lequel ladite partie incurvée (12) est centrée par rapport audit élément.

8. Porte-couvercle de casserole à utiliser avec un couvercle de casserole du type comportant un bouton central, qui comprend une partie incurvée (12) de réception du bouton, un bras allongé (14, 38) fixé de chaque côté de ladite partie incurvée, chacun desdits bras allongés (14, 38) ayant une pluralité d'encoches (34, 35) orientées transversalement espacées l'une de l'autre, définissant des bras latéraux (14) et des bras muraux (38) associés, de longueurs prédéterminées, lesdits bras latéraux et lesdits bras muraux étant susceptibles d'être coudés autour desdites encoches (34, 35) jusqu'à une position sensiblement perpendiculaire les uns aux autres et une patte fixée à l'extrémité de chaque bras mural (38).

9. Porte-couvercle de casserole selon la revendication 8, dans lequel des côtés de chacune desdites encoches (34, 35) sont des rainures on V dont les côtés se coupent sous un angle sensiblement égal a 90 degrés.
